(19) Europäisches Patentamt
European Patent Office
Office européen des brevets

(11) **EP 2 103 911 B1**

(12) **EUROPÄISCHE PATENTSCHRIFT**

(45) Veröffentlichungstag und Bekanntmachung des Hinweises auf die Patenterteilung:
**03.09.2014   Patentblatt 2014/36**

(51) Int Cl.:
***G01F 1/66*** *(2006.01)*

(21) Anmeldenummer: **09100168.5**

(22) Anmeldetag: **06.03.2009**

(54) **Strömungsmessung mit Ultraschall**

Flow measurement with ultrasound

Mesure de l'écoulement à ultrasons

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.03.2008   EP 08102712**

(43) Veröffentlichungstag der Anmeldung:
**23.09.2009   Patentblatt 2009/39**

(73) Patentinhaber: **SICK Engineering GmbH**
**01458 Ottendorf-Okrilla (DE)**

(72) Erfinder:
• **Riedel, Ekkehard**
**01109 Dresden (DE)**

• **Kochan, Michael**
**01458 Ottendorf-Okrilla (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
| | |
|---|---|
| **WO-A-94/20822** | **WO-A-96/36852** |
| **WO-A-2006/063873** | **DE-A1- 2 823 497** |
| **DE-A1- 19 859 572** | **DE-A1-102004 060 064** |
| **DE-A1-102004 060 065** | |

EP 2 103 911 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Messvorrichtung und ein Verfahren für die Bestimmung einer Strömungsgeschwindigkeit und/oder eines Durchflusses eines in einer Leitung strömenden Fluids nach dem Oberbegriff von Anspruch 1 beziehungsweise 12.

Für die Messung von Fluidgeschwindigkeiten in Rohrleitungen und Kanälen kann die Ultraschallmesstechnik nach dem Differenzlaufzeitverfahren eingesetzt werden. Dabei werden Ultraschallpulse von einem Paar Ultraschallwandler ausgesandt und empfangen, die einander gegenüber an einer Wandung der Leitung angeordnet sind und aus der Laufzeitdifferenz zwischen einem Messpfad mit der Strömung und dem Messpfad in Gegenrichtung entgegen der Strömung wird die Strömungsgeschwindigkeit bestimmt. In der Ultraschallmesstechnik herrscht häufig der Sprachgebrauch, die beiden Richtungen zusammenfassend als einen Messpfad zu bezeichnen. Da gerade bei hohen Geschwindigkeiten die Bedingungen mit und gegen die Strömungsgeschwindigkeit sich stark voneinander unterscheiden können, wird von diesem Sprachgebrauch gezielt abgewichen.

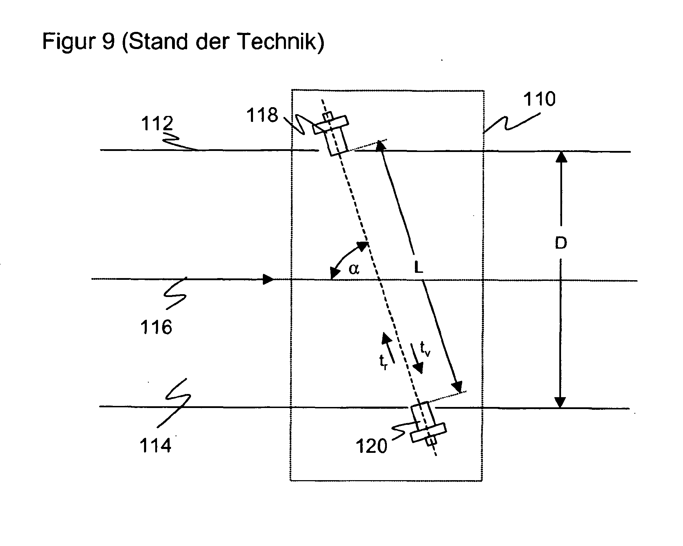

Dieses bekannte Messprinzip ist in Figur 9 dargestellt. Als wesentlicher Bestandteil einer herkömmlichen Messvorrichtung 110 sind zwei Ultraschallwandler 118, 120 in einem Winkel in der Wandung einer Rohrleitung 112 angeordnet, in der ein Fluid 114 in Pfeilrichtung 116 strömt. Die Ultraschallwandler 118, 120 arbeiten wechselweise als Sender und Empfänger. Die durch das Gas transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus der Betriebsvolumenstrom. Die geometrischen Verhältnisse sind durch die folgenden Variablen beschrieben:

> $v$: Strömungsgeschwindigkeit des Fluids in der Leitung
> $L$: Länge des Messpfades zwischen den beiden Ultraschallwandlern
> $\alpha$: Winkel, unter dem die Ultraschallwandler senden und empfangen
> $Q$: Volumenstrom
> $D$: Durchmesser der Leitung
> $t_v$: Laufzeit des Ultraschalls mit der Strömung
> $t_r$: Laufzeit des Ultraschalls gegen die Strömung
>
> Daraus ergeben sich für die gesuchten Größen $v$ und $Q$ folgende Beziehungen:

$$v = L/(2 \cos \alpha)\, (1/t_v - 1/t_r) \text{ I}$$

und

$$Q = v\; 1/4\; D^2\; \pi.$$

Eine besonders anspruchsvolle Anwendung ist die Strömungsmessung von mit sehr hoher Geschwindigkeit in Leitungen bewegten Gasen. Ein Beispiel hierfür sind Flaregasleitungen, welche in petrochemischen Anlagen zu Fackeltürmen führen und in denen Restgase des Produktionsprozesses beziehungsweise im Störfall große Gasmengen mit hoher Geschwindigkeit aus der Anlage gebracht werden. Für derart hohe Strömungsgeschwindigkeiten eines Gases von 40 m/s oder sogar 70 m/s und mehr ist die herkömmliche Ultraschallmessung nicht ohne Weiteres geeignet und führt zu nur unbefriedigend genauen Messergebnissen. Alternative Messverfahren sind aber im Gegensatz zur Ultraschallmessung abhängig von weiteren Größen wie Druck, Temperatur und Gaszusammensetzung.

Eine im Stand der Technik eingesetzte Maßnahme zur Verbesserung der Messergebnisse mit Ultraschall ist, beide Ultraschallwandler um einen zusätzlichen Vorhaltewinkel von einigen Grad gegen die Strömung anzustellen, so dass also ausgesandter Ultraschall bei idealen geraden Messpfaden das jeweilige Gegenüber verfehlen würde und wegen der Verwehung jeweils mit der Strömung zu dem gegenüberliegenden Ultraschallempfänger getrieben wird. Damit sollen Effekte der hohen Gasgeschwindigkeit ausgeglichen werden. Zudem werden zur Kompensation von Strömungseffekten aufwändige Signalauswertungen vorgenommen. Diese Maßnahme genügt jedoch nicht, zufriedenstellende Messgenauigkeit zu erreichen, weil die eigentliche Ursache der Störungen nicht erkannt und damit auch nicht kompensiert ist.

Aus der DE 10 2004 060 118 A1 ist eine Vorrichtung zur Bestimmung des Volumen- oder Massendurchflusses mit Ultraschallwandlern bekannt. Dabei werden Verformungen in einer Wand der Rohrleitung angebracht, um eine verbesserte Linearität des Messgeräts zu erzielen, also zu erreichen, dass die Strömungsgeschwindigkeit in den Messpfaden zumindest näherungsweise der über eine Querschnittsfläche gemittelten Strömungsgeschwindigkeit entspricht. Indem nach diesem Stand der Technik die Reynoldszahl in einem bestimmten Intervall gehalten wird, kann aber nicht die Signalqualität des Ultraschallsignals selbst verbessert werden, welches durch die herkömmlich völlig unberücksichtigten scharfen Kanten der Ultraschallwandler massiv beeinträchtigt wird. Eine höhere Signalqualität wird weder angestrebt noch erreicht, sondern es wird die Linearität des Messinstruments verbessert. Die erforderlichen Verformungen des Rohrstücks erhöhen außerdem wesentlich den Fertigungsaufwand.

Eine ähnlich gestaltete Ultraschallmesseinrichtung mit Querschnittsverengungen im Strömungsrohr, welche die Strömungslinien führen, ist aus der WO 2006/063873 A1 bekannt. ,

In der DE 10 2004 060 064 A1 ist ein Ultraschall-Durchflussmesser nach dem Prinzip der Laufzeitdifferenz offenbart, bei welchem den Ultraschallwandlern Turbulatoren oder Strömungsrillen vorgeordnet sind, um aerodynamisch verursachte Störsignale zu reduzieren.

Die DE 198 59 572 A1 zeigt eine Messanordnung zur Bestimmung von Gasgeschwindigkeiten in Rohrleitungen mittels Ultraschalllaufzeitmessung. Dabei sind die Ultraschallwandler an einem einzelnen langgestreckten Trägerelement montiert, das in der Rohrleitung angeordnet wird.

Bei Rohrleitungen mit großer Nennweite ist die Montage der beiden Ultraschallwandler gegenüberliegend an der Innenwandung oft problematisch, da aufgrund des langen Messpfades die Schallpegel zu gering sind. Eine übliche Gegenmaßnahme ist, die Ultraschallwandler durch geeignete Maßnahmen vollständig in das Gas einzubringen, um den Messpfad zu verkürzen. Dazu wird im Stand der Technik einerseits vorgeschlagen, beide Ultraschallwandler mit je einer Halterung in die Strömung einzubringen, wobei dann der Messpfad parallel zur Strömung liegt. Andererseits ist beispielsweise aus der US 4,754,650 bekannt, die Ultraschallwandler an einer gemeinsamen Halterung anzubringen, die wie eine Lanze schräg in die Leitung eingeführt wird, so dass ein Ultraschallwandler im Innenraum der Leitung angeordnet ist. Diese Anordnung dient nach Beschreibung der US 4,754,650 der besonders genauen Messung geringer Strömungsgeschwindigkeiten.

Bei hohen Strömungsgeschwindigkeiten und Leitungen großer Nennweiten verschärft sich die Problematik zu geringer Schallpegel noch weiter. Setzt man aber hier eine der bekannten Lösungen mit Halterung in Rohrleitungen hoher Gasgeschwindigkeit ein, so wird die Strömung extrem gestört. Es kommt zu starken Abrissturbulenzen hinter den Ultraschallwandlern und der Halterung. Ablösende Wirbel verursachen Druckwirbel, die sich allseitig, also auch gegen die Strömung ausbreiten. Beim Auftreffen der Druckwelle auf den Ultraschallwandler wird dessen Membran zum Schwingen angeregt und erzeugt ein starkes Störgeräusch.

Es ist daher Aufgabe der Erfindung, die Bestimmung einer Strömungsgeschwindigkeit eines Fluids mit Ultraschallwandlern insbesondere bei sehr hohen Strömungsgeschwindigkeiten zu verbessern.

Diese Aufgabe wird durch eine Messvorrichtung gemäß Anspruch 1 und ein Messverfahren gemäß Anspruch 12 gelöst.

Die erfindungsgemäße Lösung geht von der Erkenntnis aus, dass ein wichtiger Grund für schlechte Messwerte bei hohen Strömungsgeschwindigkeiten Abrisswirbel an den in den Innenraum der Leitung hineinragenden Ecken, Kanten, Vorsprüngen, Öffnungen und Durchdringungen der Ultraschallwandler oder der Halterung sind. Diese Strömungsstörungen verursachen eine erhebliche Lärmbelastung, welche die Ultraschallsignale überlagern. Dadurch entsteht eine starke Signalverzerrung und damit Verschlechterung des Signal/Rauschverhältnisses, wenn ein Signalpaket durch einen solchen Abrisswirbel zu dem gegenüberliegenden Ultraschallwandler gesandt wird oder wenn eine von einem Abrisswirbel erzeugte Druckstörung auf einen Ultraschallwandler trifft. Zusätzlich wird das abgestrahlte Signal auch noch durch die Strömung verweht. Daher ist die Grundidee der Erfindung, Abrisswirbel zu unterdrücken.

Die Erfindung hat den Vorteil, die Beeinflussung des Abstrahlverhaltens und besonders eine Vergrößerung des Abstrahlwinkels der Schallkeule durch Abrisswirbel zu reduzieren, welche auch durch den einleitend beschriebenen Vorhaltewinkel nicht in hinreichendem Maße kompensiert werden könnten. Indem Abrisswirbel unterdrückt werden, erhöht sich die Signalqualität, weil die Wellenfront des Signals erhalten bleibt. Die Wellenfront trifft erfindungsgemäß trotz der hohen Strömungsgeschwindigkeit unter annähernd 90° auf die Membran des empfangenden Ultraschallwandlers, womit der Krafteintrag und die Signalamplitude hoch bleiben.

Damit kann eine besonders bei hohen Strömungsgeschwindigkeiten verbesserte Messgenauigkeit erreicht werden, die nicht oder zumindest deutlich weniger von strömungstechnischen Störeffekten beeinträchtigt ist. Die Vorteile der Ultraschallmessung gegenüber anderen Verfahren, nämlich Unabhängigkeit von Druck, Temperatur und Gaszusammensetzung und weiterhin hohe Präzision, Wartungsfreiheit, Möglichkeiten der Selbstdiagnose und Vermeidung eines Druckabfalls durch die Messung können somit auch bei den genannten Anwendungen mit sehr hohen Strömungsgeschwindigkeiten ausgenutzt werden. Vergleichende Messungen zeigen, dass der Lärmpegel (Störpegel am Ultraschallwandler) sich auf die Hälfte und der Verwehungswinkel der Schallkeule um ca: 1/3 verringert.

Die Erfindung eignet sich besonders gut für Leitungen großer Nennweite, wo die beiden Ultraschallwandler aufgrund der Halterung zur Erzielung eines ausreichenden Schallpegels nahe beabstandet sind und dabei die Strömung erheblich weniger gestört wird als herkömmlich. Dabei befindet sich ein Ultraschallwandler bevorzugt vollständig im Innenraum der Leitung und wird in seiner gesamten Außenkontur strömungsoptimiert. Im Innenraum der Leitung bedeutet in diesem Zusammenhang auch einen gewissen Abstand zur Innenwand, der in vielen Anwendungen durch die Ausdehnung des Messpfads festgelegt ist. Eine Halterung im Sinne der erfindungsgemäßen Lösung ist also nicht lediglich eine Befestigung an der Innenseite der Leitung, obwohl eine solche Befestigung Teil der Halterung sein kann. Die Vermeidung von Störungen in der Strömung verbessert nicht nur die Messergebnisse, sie unterdrückt zusätzlich Vibrationen in Halterung und Ultraschallwandlern und vermeidet dadurch Materialermüdung und Defekte.

Die Halterung ist erfindungsgemäß stangenförmig oder als sogenannte Lanze ausgebildet, welche in der Leitung derart montierbar ist, dass sie von einer Innenwand der Leitung schräg in deren Innenraum hineinragt. Dabei sind der oder die Ultraschallwandler, die umströmt werden, ebenso strömungsoptimiert ausgebildet wie der Teil der Lanze, der innerhalb des Innendurchmessers liegt. Es ist auch denkbar, der Lanze als Ganzes eine strömungsoptimierte Kontur zu geben, unabhängig davon, wie tief sie im Betrieb tatsächlich in die Strömung eintaucht. Die Lanzenanordnung verbessert den Schallpegel durch einen gegenüber dem Leitungsdurchmesser verkürzten Messpfad.

Die Halterung ist ähnlich einer Tragfläche ausgebildet und weist eine in die Strömung ragende spitzer zulaufende Kante und eine in den Abstrom ragende flachere Kante auf. Durch diese Formgebung wird die Strömung besonders wenig gestört.

Die Halterung weist bevorzugt eine Haltestange und mindestens eine u-förmige Sensorhalterung auf, welche einen größeren Querschnitt aufweist als die Haltestange, wobei die Sensorhalterung an einem Schenkel der u-förmigen Sensorhalterung bündig mit der Haltestange verläuft, während die Verlängerung des anderen Schenkels den parallel zu der Haltestange verlaufenden Messpfad bildet. Zumindest der erste Ultraschallwandler im Innenraum der Leitung wird von einer derartigen Sensorhalterung aufgenommen, aber auch der zweite Ultraschallwandler kann in analoger Weise gehaltert sein. Ein gedachter Hüllkörper um Haltestange und u-förmige Sensorhalterung bildet dann insgesamt eine kompakte, strömungsoptimierte Form beispielsweise einer Tragfläche. So liegt der Messpfad in einem Bereich, in dem sich das Strömungsverhalten durch die Formgebung der Halterung besonders gut kontrollieren lässt. Dabei sind verschiedene Rotationsorientierungen der Anordnung denkbar. Je nach äußeren Gegebenheiten wie Bauraum, Zugänglichkeit oder Strömungsverhalten kann der Messpfad hinter der Haltestange in deren Strömungsschatten, neben der Haltestange oder auch vor der Haltestange liegen, wobei jeweils die Form der Anordnung entsprechend gewählt wird und der Messpfad möglichst von Abrisswirbeln ungestört bleibt.

Auch der zweite Ultraschallwandler ist bevorzugt an der Halterung angeordnet, und insbesondere bildet die Halterung mit den Ultraschallwandlern eine Einheit. Eine solche Einheit kann als Ganzes strömungsoptimiert werden, ohne dass Befestigungspunkte oder Übergänge den Konturverlauf unterbrechen. Die so mit optimierten Konturen versehene gemeinsame Einheit kann dann in einem Schritt eingesetzt und entfernt werden.

Dabei weist besonders bevorzugt auch der zweite Ultraschallwandler eine strömungsoptimierte Kontur auf, welche Abrisswirbel unterdrückt. Sofern der Ultraschallwandler im Betrieb in der Strömung liegt, verursacht er auf diese Weise keine zusätzliche Lärmstörung.

Der zweite Ultraschallwandler ist bevorzugt mittels der Halterung oder einer eigenen strömungsoptimierten zweiten Halterung im Innenraum der Leitung anordenbar. Alternativ ist der zweite Ultraschallwandler in die Nähe der Innenwand der Leitung oder in die Innenwand versenkt anordenbar. Eine Halterung ist schon an sich nur bei größeren Nennweiten erforderlich, bei kleinen Nennweiten genügt oft bereits eine einfachere Anordnung, bei der beide Ultraschallwandler in oder an der Wandung angeordnet sind. Bei größeren Nennweiten ab etwa 20" oder 50cm sind gute Messergebnisse wegen des geringen Schallpegels ohne eine Halterung nur schwer erreichbar. Bei solchen mittelgroßen Leitungen kann aber zumindest der zweite Ultraschallwandler noch in der Nähe der Wand belassen werden. Bei großen Nennweiten ab 1 m sollte die Messstrecke weiter ins Innere der Leitung gelangen, so dass beide Ultraschallwandler mittels einer gemeinsamen oder je einer Halterung in den Innenraum eingebracht werden.

Strömungsoptimiert sollten dabei immer zumindest diejenigen Bereiche und Komponenten sein, welche mit der Strömung in Berührung kommen.

Die Leitung ist vorzugsweise eine Rohrleitung mit zylindrischem oder rechteckigem Querschnitt, die für hohe Strömungsgeschwindigkeiten von zumindest 40 m/s oder sogar von zumindest 70 m/s ausgebildet und insbesondere eine Flaregasleitung ist. Die erfindungsgemäße Vermeidung von Abrisswirbeln erschließt der Ultraschallmessung diese neuen Anwendungen. Natürlich sind Rohrleitungen mit anderem Querschnitt von der Erfindung umfasst, sofern darin hohe Strömungsgeschwindigkeiten ohne allzu große Turbulenzen erreicht werden können.

Bevorzugt sind die Ultraschallwandler in einem Gehäuse untergebracht, welches die strömungsoptimierte Kontur aufweist, wobei das Gehäuse an zumindest einer Seite eine glatte, konvexe Außenkontur hat. Dieses Gehäuse kann auch größer sein als die eigentlichen Ultraschallwandler und ihre Membrane und es schafft so Freiheitsgrade der Translation und der Verkippung der Ultraschallwandler gegenüber ihrem Gehäuse, wie es die optimalen Messpfade fordern, ohne dabei die der Strömung angebotene Kontur zu verändern, welche durch das Gehäuse vorgegeben ist.

In vorteilhafter Weiterbildung sind der erste und der zweite Ultraschallwandler zueinander parallelverschoben angeordnet, so dass der erste Messpfad und der zweite Messpfad zueinander um einen Versatz in Strömungsrichtung beabstandet verlaufen. Dabei haben also die Schallachsen der einander gegenüberstehenden Ultraschallwandler zueinander den Versatz. Es hat sich nämlich gezeigt, dass die Qualität des Signals auf dem Messpfad gegen die Strömungsrichtung in besonders hohem Maße unter Abrisswirbel und Verwehungen leidet. Durch den Versatz trifft der Ultraschall auf diesem Messpfad den gegenüberliegenden Ultraschallwandler in verbesserter Weise. Zwar wird das Messergebnis auf dem Messpfad mit der Strömungsrichtung zugleich etwas beeinträchtigt, da dieser Messpfad zwangsläufig etwas schlechter auf den zugehörigen Ultraschallempfänger ausgerichtet ist. Da die Gesamtmessung als Laufzeitdifferenz von beiden Messpfaden abhängt, wird dieser geringe Verlust durch den Gewinn auf dem Messpfad gegen die Strömungsrichtung überkompensiert. Der Signal/Rauschabstand beispielsweise bei 80 m/s kann durch den Versatz um mindestens weitere 2 dB verbessert werden.

Bevorzugt sind zusätzliche Ultraschallwandler vorgesehen, welche dafür ausgebildet sind, die Strömungsgeschwindigkeit und/oder den Durchfluss auf mindestens einem weiteren Messpfad zu bestimmen. Diese zusätzlichen Ultraschallwandler und ihre gegebenenfalls vorgesehenen Halterungen weisen dabei vorzugsweise ebenfalls die erfindungsgemäße strömungsoptimierte Kontur auf. Durch zusätzliche Messpfade kann bei gestörten Strömungen ein besseres Maß für den Volumenstrom gefunden werden, welches nicht oder weniger durch lokale Geschwindigkeitsunterschiede der Strömung verfälscht ist. Dabei sind zwei Fälle zu unterscheiden: Entweder wird ein zusätzlicher Empfänger etwas weiter stromabwärts eingesetzt, welcher einen stärker verwehten Anteil des Messsignals aufnimmt und damit eigentlich noch dem ursprünglichen Paar von Messpfaden zugehört, oder es werden ein oder mehrere zusätzliche Paare von Ultraschallwandlern eingesetzt, die ein klassisches Mehrpfadmesssystem bilden. Die beiden Fälle lassen sich auch vereinen, so dass dann in einem klassischen Mehrpfadsystem jeweils mehrere Empfänger den verwehten Anteil zusätzlich aufnehmen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Insbesondere wird das Messverfahren bevorzugt bei laufenden Betrieb eingerichtet, indem ein einziger Flansch während des weiter bestehenden Fluidstroms angeschweißt und die Halterung in den Fluidstrom eingeführt wird. Diese "hot tapping" genannte Montierung bei fließendem Gas ermöglicht einen schnellen und unaufwändigen Einbau ohne Stillzeiten. Dabei wird anschließend mittels des nur einen benötigten Flansches die Messvorrichtung als einheitliches Kompaktgerät eingeführt. Die Lanzenanordnung lässt sich auch dann montieren, wenn die Leitung nur einseitig zugänglich ist, wie dies etwa bei eng geführten Rohrbündeln der Fall ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    einen Längsschnitt durch eine Rohrleitung mit einem ersten Beispiel einer Messvorrichtung;

Fig. 2    ein schematisches Blockschaltbild der Messvorrichtung gemäß Figur 1;

Fig. 3    einen Längsschnitt gemäß Figur 1 zur Erläuterung der Entstehung und Auswirkung von Abrisswirbeln und Verwehungen;

Fig. 4    einen Funktionsplot der theoretisch zu erwartenden Verwehungswinkel in Abhängigkeit von der Strömungsgeschwindigkeit;

Fig. 5a    eine dreidimensionale Ansicht einer Ausführungsform einer erfindungsgemäßen Halterung mit Ultraschallwandlern;

Fig. 5b    eine an der Längsachse gespiegelte Ansicht gemäß Fig. 5a;

Fig. 5c    eine grauschattierte Ansicht gemäß Fig. 5a zur weiteren Illustration der strömungsoptimierten Kontur;

Fig. 6a    eine grafische Darstellung des Signal/Rauschabstands über verschiedenen Strömungsgeschwindigkeiten bei Verwendung einer herkömmlichen Messvorrichtung als Vergleichsbasis;

Fig. 6b    eine Darstellung gemäß 6b bei erfindungsgemäßer Strömungsoptimierung;

Fig. 7    einen Längsschnitt ähnlich Figur 1 zur Erläuterung der Wirkung eines Parallelversatzes der Ultraschallwandler;

Fig. 8    einen Längsschnitt ähnlich Figur 1 mit zusätzlichen strömungsoptimierten Konturen der Rohrleitung; und

Fig. 9    einen Längsschnitt durch eine Rohrleitung mit einer Messvorrichtung nach dem Stand der Technik zur Erläuterung eines Ultraschallmessverfahrens mittels einer Laufzeitdifferenz.

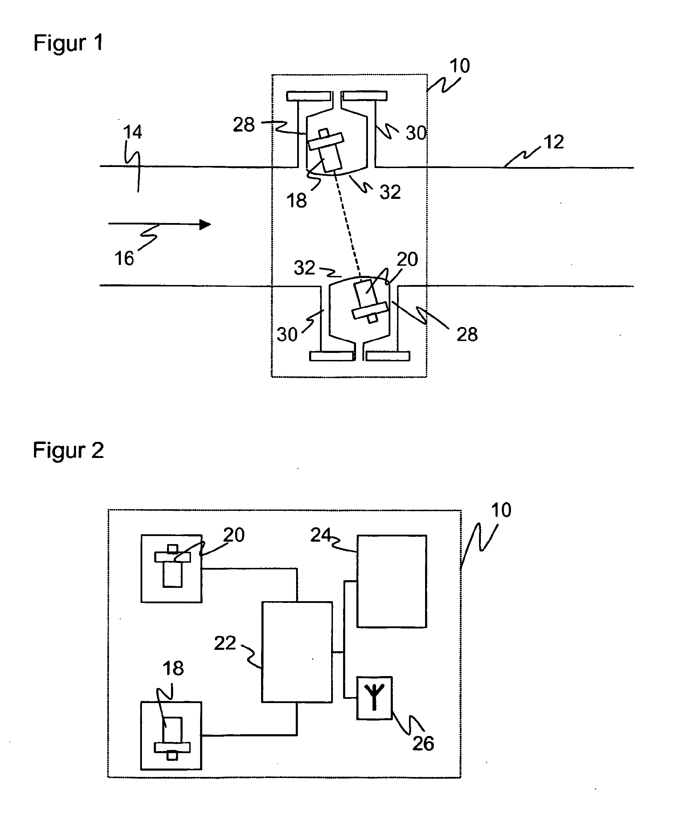

Figur 1 zeigt im Längsschnitt eine Messvorrichtung 10, welche an einer Rohrleitung 12 montiert ist, in der ein Fluid 14 in der durch den Pfeil 16 bezeichneten Richtung strömt. Die in Figur 1 dargestellte Messvorrichtung 10 fällt nicht in den Schutzbereich der Ansprüche. Die Rohrleitung 12 ist zylindrisch, könnte aber auch einen anderen Querschnitt aufweisen. Ein Paar Ultraschallwandler 18, 20 ist so zueinander ausgerichtet, dass von dem einen Ultraschallwandler 18 ausgesandter Ultraschall von dem anderen Ultraschallwandler 20 empfangen werden kann und umgekehrt. Figur 2 zeigt die Messvorrichtung 10 in einem schematischen Blockschaltbild, wobei hier wie im Folgenden gleiche Bezugszeichen die gleichen Merkmale bezeichnen.

Eine Steuerung 22, beispielsweise ein Mikroprozessor oder eine andere Logik, wie ein FPGA, ein DSP, ein ASIC, steuert das Aussenden von Ultraschallsignalen durch die Ultraschallwandler 18, 20, beispielsweise als Pulsserie bei einer Ultraschallfrequenz von 80 kHz und größer und wertet die Laufzeiten der am gegenüberliegenden Ultraschallwandler 20, 18 empfangenen Signale aus. Daraus kann die Steuerung 22 mit dem einleitend im Zusammenhang mit der Figur 9 beschriebenen oder einem anderen Verfahren die Strömungsgeschwindigkeit und den Volumenstrom berechnen. Die Messergebnisse können dann weiterverarbeitet werden, indem sie gespeichert, über eine Anzeige 24 dargestellt oder mittels einer Schnittstelle 26 drahtgebunden oder auch drahtlos, etwa seriell, per Ethernet, WLAN, Bluetooth, Mobilfunk oder einem anderen Standard ausgegeben werden. Umgekehrt kann ein Computer, ein Notebook, ein PDA oder dergleichen angeschlossen werden, um die Steuerung 22 zu konfigurieren, Firmware aufzuspielen oder dergleichen.

Jeder Ultraschallwandler 18, 20 ist in einem Gehäuse 28 angeordnet, welches jeweils in einem senkrecht zur Rohrleitung orientierten Stutzen 30 durch senkrechte Flanschmontage befestigt wird. Im Bereich der Membranen der Ultraschallwandler 18, 20 zur Abstrahlung und zum Empfang von Ultraschall ist das Gehäuse 28 für Ultraschall durchlässig, weist eine Öffnung auf, oder die Membranen sind am Ort der Abstrahlung und des Empfangs in das Gehäuse 28 integriert. Die Ultraschallwandler 18, 20 sind gegenüber ihrem Gehäuse 28 um einen Winkel von beispielsweise 15° verkippt, damit der Messpfad in der einen Richtung mit der Strömung und in der anderen Richtung gegen die Strömung verläuft. Dieser Winkel kann, anders als in Figur 1 dargestellt, absichtlich gegen die Strömungsrichtung angestellt werden, so dass erst der durch die Strömung verwehte Ultraschall jeweils auf den gegenüberliegenden Ultraschallwandler 18, 20 gerichtet ist.

Jedes Gehäuse 28 ragt aus dem zugehörigen Stutzen 30 ein Stück in den Innenraum der Rohrleitung 12 und damit in die Strömung des Fluids 14 hinein. Dabei ist diejenige Außenkontur 32 des Gehäuses 28, die in die Strömung hineinragt, strömungsoptimiert ausgebildet, um die Ausbildung von Abrisswirbeln in der Strömung an dem Gehäuse 28 zu unterdrücken. Die Außenkontur 32 ist daher bevorzugt glatt und konvex, bietet der Strömung also keine Kanten, Ecken sowie nach innen oder außen gerichtete Ausbuchtungen, in denen Turbulenzen und Wirbel entstehen oder verstärkt werden könnten. Die Form der Außenkontur 32 kann in Abhängigkeit der geplanten Anwendung, also besonders der Art des zu messenden Fluids und der zu erwartenden Strömungsgeschwindigkeiten, experimentell oder theoretisch bestimmt werden und sich dabei an aerodynamischen Formen orientieren, wie sie etwa aus der Luftfahrttechnik bekannt sind. Auch die in Figur 1 beispielhaft dargestellte dargebotene Außenkontur 32 ähnelt dem Profil einer Tragfläche.

In einer alternativen Ausführungsform kann anstelle des Gehäuses 28 der Ultraschallwandler 18, 20 selbst eine strömungsoptimierte Außenkontur aufweisen. Dieser Ultraschallwandler ist dann schräg zu montieren und seine Außenkontur wird sich für gewöhnlich nur für bestimmte Verkippungswinkel optimieren lassen. Die Ausführungsform mit einem Gehäuse 28 ist also insofern flexibler, als der Verkippungswinkel und in gewissem Rahmen auch eine Translation des Ultraschallwandlers 18, 20 relativ zu dem Gehäuse 28 unabhängig gewählt werden können.

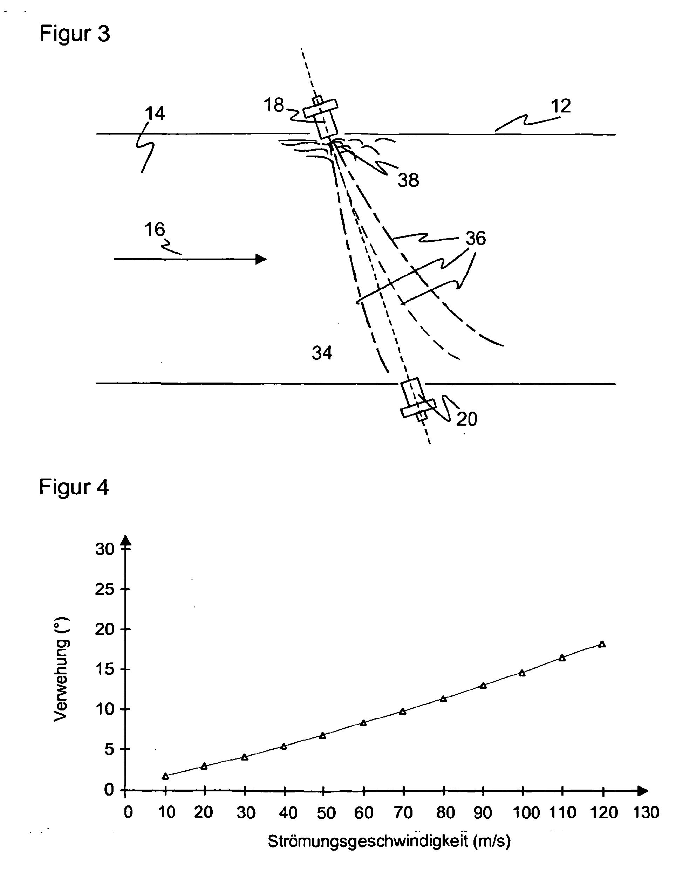

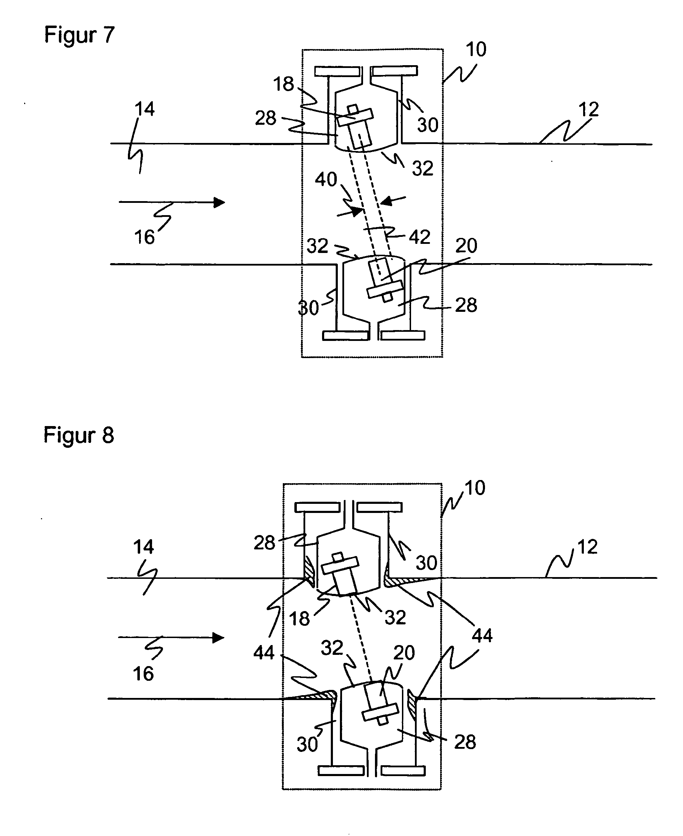

Die Gründe, warum eine strömungsoptimierte Kontur 32 die Messergebnisse drastisch verbessert, werden nun anhand der Figuren 3 und 4 näher erläutert. Aus einer Analyse von Wellenausbreitungen in Gasen lässt sich nämlich erkennen, wie Wellenfronten bei auftretenden Querströmungen gestört werden [vergleiche hierzu etwa L. Cervino et al., "Perturbation and adjoint analyses of flow-acoustic interactions in an unsteady 2D jet", Proceedings of the 2002 Summer Program, Center for Turbulence Research, insbesondere Figur 8]. Entsprechend stören die Abrisswirbel 38 die Wellenfronten des Ultraschallsignals der Ultraschallwandler 18, 20 und damit die Messgenauigkeit.

Figur 3 zeigt einen weiteren Längsschnitt einer Rohrleitung 12 mit einem darin strömenden Fluid 14 sowie ein Paar Ultraschallwandler 18, 20. Das Ultraschallsignal wird gegenüber einer idealen Ausbreitungsrichtung auf einem Messpfad 34 in Abhängigkeit von der Strömungsgeschwindigkeit verweht, wie dies durch die gestrichelten Linien 36 angedeutet ist. Dabei ändert sich nicht allein die Ausbreitungsrichtung des Ultraschalls, sondern auch die Form der Schallkeule.

An den scharfen Kanten der hier herkömmlich ohne strömungsoptimierte Kontur ausgebildeten Ultraschallwandler 18, 20 bilden sich Abrisswirbel 38, die auch ein weitaus größeres Ausmaß annehmen können als dargestellt. Diese führen zu einer starken Signalverzerrung, nämlich einem störenden Lärmpegel an den Ultraschallwandlern 18, 20, der die Qualität der Geschwindigkeitsmessung erheblich beeinträchtigt und ab einer gewissen Geschwindigkeit des Fluids 14 eine Messung per Ultraschall für die Praxis untauglich macht. Die strömungsoptimierte Außenkontur 32 ermöglicht also erst die Anwendung einer Ultraschallmessung bei Strömungsgeschwindigkeiten auch oberhalb einer Grenze von etwa 40m/s oder sogar oberhalb etwa 70 m/s wie beispielsweise in einer Flaregasleitung.

Die Abrissturbulenzen oder Abrisswirbel 38 verstärken aber zusätzlich zu dem störenden Lärmpegel auch den Verwehungseffekt. In Figur 4 ist mit dreieckigen Datenpunkten und einer durchgezogenen Linie die mit einem Vektoransatz berechnete theoretische Abhängigkeit des Verwehungswinkels von der Strömungsgeschwindigkeit aufgetragen. Experimentelle Untersuchungen zeigen, dass die maximale Amplitude des gesendeten Ultraschallsignals deutlich stärker verweht wird, als dies die theoretische Herleitung vorhersagt. Die Kurve der tatsächlichen Verwehungswinkel läge demnach in Figur 4 deutlich oberhalb der dargestellten theoretischen Vorhersage und eine Unterdrückung von Abrisswirbeln 38 vermag deshalb als zweiten Verbesserungseffekt zu einer Reduktion des Lärmpegels auch die negativen Auswirkungen der Verwehung zu begrenzen.

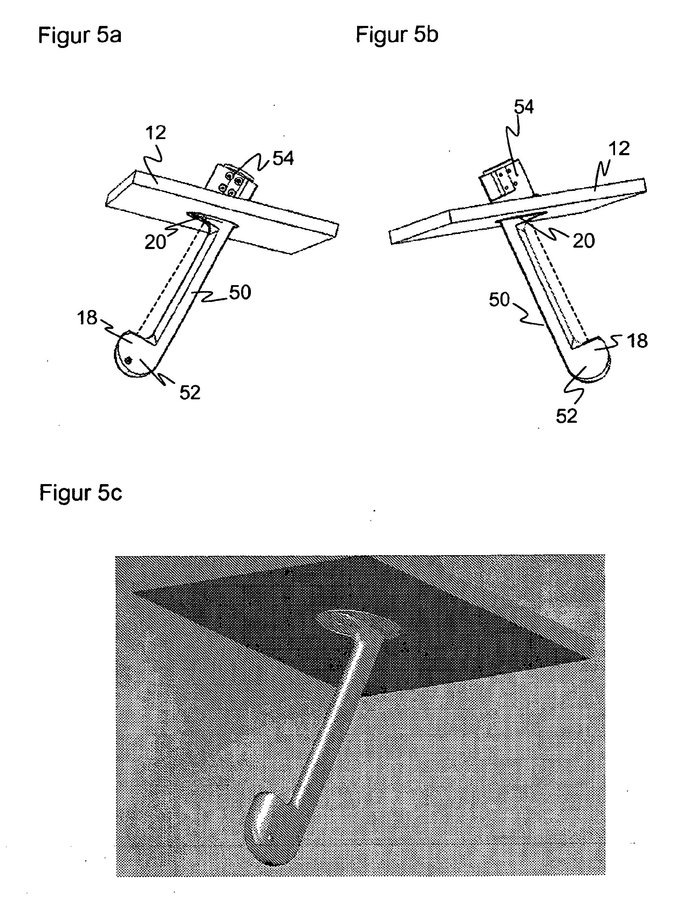

Die Ausgestaltungen und Prinzipien des bisher erläuterten Aufbau2 gelten auch dann, wenn erfindungsgemäß ein Ultraschallwandler 18, 20 weiter in den Innenraum hineinragt. Die Figur 5 zeigt eine erfindungsgemäße Ausführungsform einer Messvorrichtung 10 mit einer strömungsoptimierten Halterung 50, welche einen Ultraschallwandler 18 ins Innere der Rohrleitung 12 einbringt. Dabei ist Figur 5a eine dreidimensionale Seitenansicht, Figur 5b die Seitenansicht gemäß Figur 5a nach Drehung um 180° und Figur 5c die Messvorrichtung in Grauschattierung zur weiteren Illustration der strömungsoptimierten Kontur.

Die Halterung 50 dient dazu, einen Ultraschallwandler 18 im Innenraum der Leitung 12 zu halten, um zur Verbesserung des Schallpegels einen kürzeren Messpfad zu erreichen als bis zur gegenüberliegenden Wand der Leitung 12. Die beiden Ultraschallwandler 18, 20 sind in der Darstellung der Figur 5 nur andeutungsweise erkennbar, da sie von der Halterung 50 einkapselt sind. Den ersten Ultraschallwandler 18 haltert eine halbkreis- oder u-förmige Sensorhalterung 52, deren einer Schenkel mit der eigentlichen Haltestange fluchtet, während der andere Schenkel den Messpfad bildet. Am gegenüberliegenden Ende der Halterung 50 ist die Anbringung 54 nur angedeutet, mit welcher die Messvorrichtung 10 angeflanscht und mit der Auswertungselektronik verbunden wird.

Der zweite Ultraschallwandler 20 ist in der dargestellten Ausführungsform bis auf die Höhe der Wand der Leitung 12 zurückgezogen, um Störungen der Strömung weiter zu unterdrücken. In anderen Fällen, beispielsweise bei noch größeren Nennweiten der Leitung 12, kann der zweite Ultraschallwandler 20 auch tiefer in die Leitung 12 in eine geeignete Messzone eingeführt und dann ebenfalls von einem stromlinienförmigen Design eingehüllt sein. Die Halterung 50 bildet in jedem Fall gemeinsam mit den Ultraschallwandlern 18, 20 eine kompakte Einheit, die zumindest in den fluidumströmten Bereichen strömungsoptimiert ist.

Das dargestellte Strömungsprofil eignet sich in erster Linie bei einem Strömungsverlauf, der einem in der Papierebene der Figur 5a von rechts nach links strömenden Fluid entspricht und bei dem der Messpfad im Strömungsschatten der Halterung 50 liegt. Andere Anwendungen und anderer Strömungsprofile können abweichend auch eine umgekehrte oder beispielsweise Nebeneinanderordnung von Messpfad und Halterung 50 erfordern.

In einer nicht dargestellten Variante wird der zweite Ultraschallwandler 20 mit einer eigenen, separaten Halterung in den Innenraum der Leitung 12 geführt. Dann ist möglich, beide Halterungen radial in der Leitung 12 anzuordnen und einen Messpfad parallel zur Strömungsrichtung zu wählen. Selbstverständlich kann auch die Halterung 50 der Ausführungsform aus Figur 5 einen anderen Winkel mit der Wand der Leitung 12 einschließen.

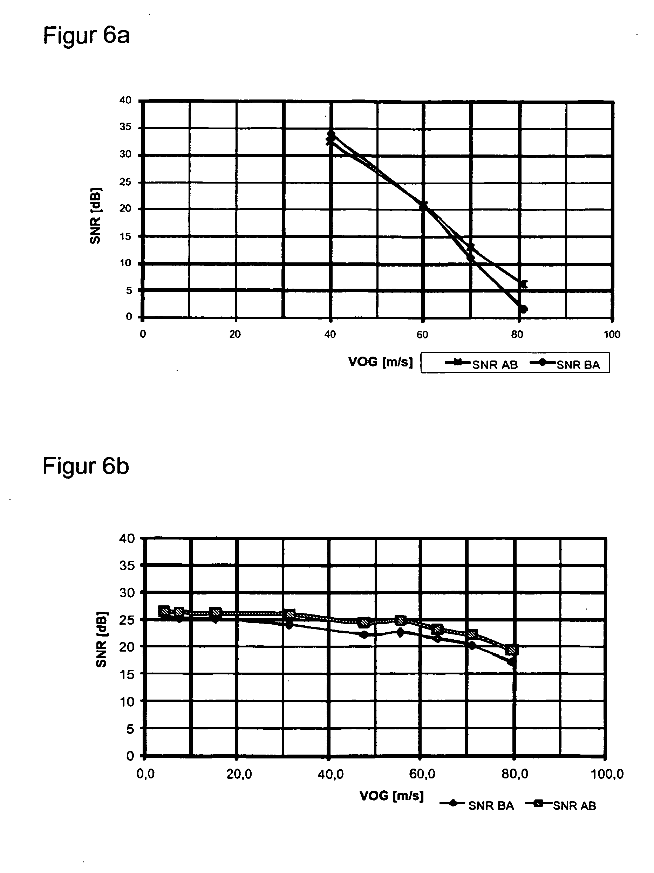

Der Effekt der erfindungsgemäßen Strömungsoptimierung wird in Figur 6 veranschaulicht. Dort ist das Signal/Rauschverhältnis SNR über der Strömungsgeschwindigkeit VOG aufgetragen, und zwar als Vergleichsbasis in Figur 6a in einem 8"-Zählkörper mit einer herkömmlichen Anordnung und in Figur 6b der erfindungsgemäße Effekt in einem 10"-Zählkörper nach Strömungsoptimierung. Man erkennt sofort einen nur relativ geringen Abfall des Signal/Rauschverhältnisses bei Strömungsoptimierung in Figur 6a und ganz beträchtliche Nutzsignalverluste von bis zu 15dB bei herkömmlicher Messung, wobei die Verluste im Bereich oberhalb von 40m/s einsetzen und bei 80 m/s praktisch nur noch Rauschen übrig lassen. Die Erfindung erweitert den nutzbaren Messbereich erheblich und verbessert die Messgenauigkeit besonders bei hohen Strömungsgeschwindigkeiten oberhalb 40 m/s und erst recht im Bereich 60-80 m/s und mehr.

In Figur 7 ist eine weitere Ausgestaltung der Messvorrichtung 10 dargestellt. Die in Figur 7 dargestellte Messvorrichtung 10 fällt nicht in den Schutzbereich der Ansprüche. Sie unterscheidet sich darin, dass die Ultraschallwandler 18, 20 zueinander einen Parallelversatz 40 aufweisen. Würde sich also der Ultraschall in einer einfachen geraden Linie 42 ausbreiten, so verfehlte die Hauptausbreitungsrichtung jeweils den gegenüberliegenden Ultraschallwandler 18, 20.

Wie Figur 3 illustriert, wird aber die Schallkeule 36 verweht. Aufgrund des Parallelversatzes 40 trifft die von dem Ultraschallwandler 20 ausgesandte Schallkeule auf dem Messpfad gegen die Strömungsrichtung aufgrund der Verwehung den Ultraschallwandler 18 besser, als wenn kein Parallelversatz 40 vorgesehen ist. Umgekehrt wird auf dem Messpfad mit der Strömungsrichtung der nachteilige Effekt durch die Verwehung nur wenig verstärkt. Grund ist die unterschiedliche zeitliche Einwirkung der Strömung auf die beiden gegenläufigen Ultraschallsignale. Mit anderen Worten wird der nachteilige Effekt auf dem Messpfad mit der Strömungsrichtung durch den positiven Effekt auf dem Messpfad gegen die Strömungsrichtung überkompensiert. Bevorzugt wird der Parallelversatz 40 so groß gewählt, dass auf beiden Messpfaden das Signal/Rauschverhältnis gleich gut ist und damit das Gesamtsystem sein Optimum erreicht. Dieses anhand direkt an der Wandung befestigten Ultraschallwandlern 18, 20 erläuterte Prinzip gilt ebenso, wenn eine Halterung 50 verwendet wird, die dann in Weiterbildung zur Ausführungsform gemäß Figur 5 leicht verformt sein kann, um den Parallelversatz zu integrieren, oder in der die Ultraschallwandler 18, 20 versetzt angeordnet werden.

Figur 8 zeigt ein weiteres Beispiel einer Messvorrichtung 10, bei der zusätzlich zu einer strömungsoptimierten Außenkontur 32 der Ultraschallwandler 18, 20 oder von deren Gehäuse 28 auch die Wandung der Rohrleitung 12 strömungsoptimiert wird. Dabei werden Verformungen 44 an der Innenwandung der Rohrleitung 12 angebracht, welche bevorzugt die strömungsoptimierte Außenkontur 32 fortsetzen. Das Fluid 14 wird also bereits beim Anströmen auf die Ultraschallwandler 18, 20 so gelenkt, dass an dem Gehäuse 28 die Abrisswirbel 38 noch stärker unterdrückt werden als durch die Außenkontur 32 allein. Nochmals in anderen Worten ausgedrückt ermöglichen die Verformungen 44, eine strömungsoptimierte Kontur noch besser anzupassen und insbesondere über eine größere Fläche vorzusehen als das Gehäuse 28 beziehungsweise den Querschnitt des Stutzens 30. Dadurch entstehen weitere Freiheitsgrade, um die Auftreffflächen des an- und abströmenden Fluids 14 für eine zusätzliche Verbesserung der Messgenauigkeit noch besser auf die Strömung zu optimieren. Bei erfindungsgemäßer Verwendung einer Halterung 50 dienen die Verformungen in erster Linie der Strömungsoptimierung an dem zweiten Ultraschallwandler 20, der an der Wandung angeordnet ist, obwohl prinzipiell denkbar ist, mit derartigen Verformungen auch das Strömungsverhalten insgesamt weiter zu optimieren. Die in Figur 8 dargestellte Messvorrichtung 10 fällt nicht in den Schutzbereich der Ansprüche.

Zur weiteren Strömungsoptimierung kann ein Gleichrichter in dem Innenraum der Rohrleitung 12 vorgesehen sein, welcher die Strömung des Fluids 12 für den Bereich der Messvorrichtung 10 linearisiert oder zumindest Turbulenzen verringert und der dafür in oder vor diesem Bereich angeordnet ist. Die Außenkontur 32, die Verformungen 44 und/oder der Gleichrichter können dabei auf ein Zusammenwirken zur möglichst weitgehenden Unterdrückung von Abrisswirbeln 38 optimiert werden.

Es ist weiterhin vorstellbar, zusätzlich zu den Ultraschallwandlern 18, 20 weitere einzelne oder Paare von Ultraschallwandlern einzusetzen, um weitere Messpfade zu erhalten. Eine besondere Position für einen solchen zusätzlichen Ultraschallwandler ist stromabwärts in einem Bereich, in dem stärker verwehte Signalanteile empfangen werden, um somit durch den Empfang desselben Signals an unterschiedlichen Orten eine bessere Gesamtinformation zu erhalten. Alternativ oder zusätzlich können weitere Paare von Ultraschallwandlern eingesetzt werden, um nach Art eines klassischen Mehrpfadsystems einen örtlich anderen Anteil der Strömungsgeschwindigkeit zu messen. Jeder Messpfad gibt dabei Auskunft über die Strömungsgeschwindigkeit in seiner lokalen Umgebung. Ist die Strömung gestört, so muss dies nicht notwendig der mittleren Strömungsgeschwindigkeit entsprechen und es kann auch eine ungenaue Bestimmung des Volumendurchsatzes resultieren. Weitere Messpfade über den Querschnitt der Rohrleitung 12 verbreitern die Basis an Information über das Strömungsprofil und ermöglichen somit eine genauere Messung.

Die zu einer einzelnen Ausführungsform beschriebenen Merkmale lassen sich jeweils mit den anderen Ausführungsformen kombinieren. So ist beispielsweise möglich, Verformungen der Rohrleitung 12 zusätzlich zu einem Parallelversatz 40 der Ultraschallwandler 18, 20 vorzunehmen, oder Strömungsoptimierungen des Gehäuses der Ultraschallwandler 18, 20 mit denjenigen der Halterung 50 zu kombinieren.

**Patentansprüche**

1. Messvorrichtung (10) für die Bestimmung einer Strömungsgeschwindigkeit und/oder eines Durchflusses eines in einer Leitung (12) strömenden Fluids (14) mit mindestens einem ersten Ultraschallwandler (18) und einem zweiten Ultraschallwandler (20), die in der Leitung (12) derart zueinander angeordnet sind, dass im Betrieb der auf einem ersten Messpfad vom ersten Ultraschallwandler (18) zum zweiten Ultraschallwandler (20) ausgesandte und empfangene Ultraschall gegenüber einem auf einem zweiten Messpfad in umgekehrter Richtung von dem zweiten Ultraschallwandler (20) gesendeten und von dem ersten Ultraschallwandler (18) empfangenen Ultraschall eine von der Strömungsgeschwindigkeit abhängige Laufzeitdifferenz aufweist, wobei eine Halterung (50) vorgesehen und der erste Ultraschallwandler (18) mittels der Halterung (50) in dem Innenraum der Leitung (12) anordenbar ist, wobei die Halterung (50) als Lanze ausgebildet ist, weiche in der Leitung (12) derart montierbar ist, dass sie von einer Innenwand der Leitung (12) schräg in deren Innenraum (14) hineinragt,
**dadurch gekennzeichnet,**
**dass** der erste Ultraschallwandler (18) und zumindest derjenige Teilbereich der Halterung (50), der nach Montage im Innenraum der Leitung (12) vorgesehen ist, eine strömungsoptimierte Kontur (32) aufweisen, welche Abrisswirbel (38) unterdrückt, und dass die Halterung (50) ähnlich einer Tragfläche ausgebildet ist und eine in die Strömung ragende spitzer zulaufende Kante und eine in den Abstrom ragende flachere Kante aufweist.

2. Messvorrichtung (10) nach einem der vorhergehenden Ansprüche,
wobei die Halterung (50) eine Haltestange und mindestens eine u-förmige Sensorhalterung (52) aufweist, welche einen größeren Querschnitt aufweist als die Haltestange, wobei die Sensorhalterung (52) an einem Schenkel der u-förmigen Sensorhalterung (52) bündig mit der Haltestange verläuft, während die Verlängerung des anderen Schenkels den parallel zu der Haltestange verlaufenden Messpfad bildet.

3. Messvorrichtung (10) nach einem der vorhergehenden Ansprüche,
wobei auch der zweite Ultraschallwandler (20) an der Halterung (50) angeordnet ist und insbesondere die Halterung (50) mit den Ultraschallwandlern (18, 20) eine Einheit bildet.

4. Messvorrichtung (10) nach einem der vorhergehenden Ansprüche,
wobei der zweite Ultraschallwandler (20) eine strömungsoptimierte Kontur aufweist, welche Abrisswirbel unterdrückt.

5. Messvorrichtung (10) nach einem der vorhergehenden Ansprüche,
wobei der zweite Ultraschallwandler (20) mittels der Halterung (50) oder einer eigenen strömungsoptimierten zweiten Halterung im Innenraum (14) der Leitung (12) anordenbar ist.

6. Messvorrichtung (10) nach einem der Ansprüche 1 bis 4,
wobei der zweite Ultraschallwandler (20) in die Nähe der Innenwand der Leitung (12) oder in die Innenwand versenkt anordenbar ist.

7. Messvorrichtung (10) nach einem der vorhergehenden Ansprüche,
wobei die Leitung (12) eine Rohrleitung mit zylindrischem oder rechteckigem Querschnitt ist, die für hohe Strömungsgeschwindigkeiten von zumindest 40 m/s oder sogar von zumindest 70 m/s ausgebildet ist, insbesondere eine Flaregasleitung ist.

8. Messvorrichtung (10) nach einem der vorhergehenden Ansprüche,
wobei der erste Ultraschallwandler (18) und der zweite Ultraschallwandler (20) zueinander parallelverschoben angeordnet sind, so dass der erste Messpfad und der zweite Messpfad zueinander um einen Versatz (40) in Strömungsrichtung beabstandet verlaufen.

9. Messverfahren für die Bestimmung einer Strömungsgeschwindigkeit und/oder eines Durchflusses eines in einer Leitung (12) strömenden Fluids (14), wobei eine von der Strömungsgeschwindigkeit abhängige Laufzeitdifferenz von Ultraschall zwischen einem ersten Ultraschallwandler (18) und einem zweiten Ultraschallwandler (20) ausgewertet wird, nämlich von Ultraschall auf einem ersten Messpfad und auf einem in umgekehrter Richtung zu dem ersten Messpfad verlaufenden zweiten Messpfad, wobei mindestens der erste Ultraschallwandler (18) mittels einer als Lanze ausgebildeten Halterung (50) in den Innenraum der Leitung (12) und damit in den Fluidstrom eingeführt ist,
**dadurch gekennzeichnet,**
**dass** Abrisswirbel (38) an dem ersten Ultraschallwandler (18) und der Halterung (50) durch eine strömungsoptimierte Kontur (32) unterdrückt werden, wobei die Halterung (50) von einer Innenwand der Leitung (12) schräg in deren Innenraum (14) hineinragt und ähnlich einer Tragfläche eine in die Strömung ragende spitzer zulaufende Kante und eine in den Abstrom ragende flachere Kante aufweist.

10. Messverfahren nach Anspruch 9,
wobei das Fluid eine Strömungsgeschwindigkeit von zumindest 40 m/s oder sogar von zumindest 70 m/s hat und insbesondere Flaregas ist.

11. Messverfahren nach Anspruch 9 oder 10,
das bei laufendem Betrieb eingerichtet wird, indem ein einziger Flansch während des weiter bestehenden Fluidstroms angeschweißt und die Halterung (50) in den Fluidstrom eingeführt wird.

12. Messverfahren nach einem der Ansprüche 9 bis 11,
wobei die Messung unter einem Parallelversatz (40) in Strömungsrichtung des ersten gegenüber dem zweiten Messpfad erfolgt.

**Claims**

1. A measuring device (10) for the determination of a flow velocity and/or a flow rate of a fluid (14) flowing in a pipe (12), the device (10) having at least a first ultrasonic transducer (18) and a second ultrasonic transducer (20) which are arranged towards one another within the pipe (12) so that during operation ultrasound transmitted and received on a first measurement path from the first ultrasonic transducer (18) to the second ultrasonic transducer (20) has a flow velocity dependent time of flight difference with respect to ultrasound on a second measurement path in the reverse direction transmitted by the second ultrasonic transducer (20) and received by the first ultrasonic transducer (18), wherein a holder (50) is provided and the first ultrasonic transducer (18) can be arranged in the interior of the pipe (12) by means of the holder (50), wherein the holder (50) is formed as a lance which is mountable in the pipe (12) so that it obliquely protrudes from an inner wall of the pipe (12) into its interior (14),
**characterized in that**
the first ultrasonic transducer (18) and at least that portion of the holder (50) which after the mounting is provided in the interior of the pipe (12) have a flow-optimized contour (32) which suppresses separated eddies (38), and **in that** the holder (50) is formed like a wing and comprises a sharper edge extending into the influent flow and a flatter edge extending into the effluent flow.

2. The measuring device (10) according to any of the preceding claims,
wherein the holder (50) comprises a holding rod and at least one U-shaped sensor mount (52) which has a larger cross-section than the holding rod, wherein the sensor mount (52) on one leg of the U-shaped sensor mount (52) is flush with the holding rod, whereas the extension of the other leg forms the measurement path running parallel to the holding rod.

3. The measuring device (10) according to any of the preceding claims,
wherein the second ultrasonic transducer (20) is also arranged on the holder (50) and wherein in particular the holder (50) forms one unit with the ultrasonic transducers (18, 20).

**4.** The measuring device (10) according to any of the preceding claims,
wherein the second ultrasonic transducer (20) comprises a flow-optimized contour which suppresses separated eddies.

**5.** The measuring device (10) according to any of the preceding claims,
wherein the second ultrasonic transducer (20) can be arranged in the interior (14) of the pipe (12) by means of the holder (50) or a separate flow-optimized second holder.

**6.** The measuring device (10) according to any of claims 1 to 4,
wherein the second ultrasonic transducer (20) can be arranged next to the inner wall of the pipe (12) or sunk into the inner wall.

**7.** The measuring device (10) according to any of the preceding claims,
wherein the pipe (12) is a piping of cylindrical or rectangular cross-section which is made for high flow velocities of at least 40 m/s or even of at least 70 m/s, in particular is a flare gas conduit.

**8.** The measuring device (10) according to any of the preceding claims,
wherein the first ultrasonic transducer (18) and the second ultrasonic transducer (20) are arranged with a mutual parallel offset so that the first measurement path and the second measurement path run with an offset (40) in the flow direction.

**9.** A measuring method for the determination of a flow velocity and/or a flow rate of a fluid (14) flowing in a pipe (12), wherein a flow velocity dependent time of flight difference of ultrasound between a first ultrasonic transducer (18) and a second ultrasonic transducer (20) is evaluated, namely, of ultrasound on a first measurement path and on a second measurement path running in the reverse direction of the first measurement path, wherein at least the first ultrasonic transducer (18) is introduced into the interior of the pipe (12) and thus into the fluid flow by means of a holder (50) formed as a lance,
**characterized in that** separated eddies (38) at the first ultrasonic transducer (18) and the holder (50) are suppressed by a flow-optimized contour (32), wherein the holder (50) protrudes obliquely from an inner wall of the pipe (12) into its interior (14) and comprises a sharper edge extending into the influent flow and a flatter edge extending into the effluent flow similar to a wing.

**10.** The measuring method according to claim 9,
wherein the fluid has a flow velocity of at least 40 m/s or even of at least 70 m/s and in particular is flare gas.

**11.** The measuring method according to claim 9 or 10, which is established during operation by welding a single flange during the continued fluid flow and introducing the holder (50) into the fluid flow.

**12.** The measuring method according to any of claims 9 to 11,
wherein the measurement is performed with a parallel offset (40) in flow direction of the first relative to the second measurement path.

**Revendications**

**1.** Dispositif de mesure (10) pour la détermination d'une vitesse d'écoulement et/ou d'un débit d'un fluide (14) qui s'écoule dans un conduit (12), comprenant au moins un premier transducteur à ultrasons (18) et un second transducteur à ultrasons (20), qui sont agencés dans le conduit (12) l'un par rapport à l'autre de telle façon qu'en fonctionnement, les ultrasons émis et reçus sur un premier trajet de mesure depuis le premier transducteur à ultrasons (18) vers le second transducteur à ultrasons (20) présentent, par rapport aux ultrasons émis sur un second trajet de mesure en direction opposée depuis le second transducteur à ultrasons (20) et reçus par le premier transducteur à ultrasons (18), une différence de temps de parcours dépendant de la vitesse d'écoulement, dans lequel il est prévu une monture (50) et le premier transducteur à ultrasons (18) est susceptible d'être agencé dans le volume intérieur du conduit (12) au moyen de la monture (50), ladite monture (50) étant réalisée sous forme de lance, qui peut être montée dans le conduit (12) de telle façon qu'elle pénètre depuis une paroi intérieure du conduit (12) en oblique dans le volume intérieur (14) celui-ci,
**caractérisé en ce que**
le premier transducteur à ultrasons (18) et au moins la région partielle de la monture (50) qui se trouve après montage dans le volume intérieur du conduit (12) présentent un contour (32) optimisé vis-à-vis de l'écoulement, qui inhibe des turbulences de décollement (38), et **en ce que** la monture (50) est réalisée de manière analogue à une surface portante et présente une arête convergente en pointe dirigée vers l'écoulement incident, et une arête plane dirigée vers l'écoulement partant.

**2.** Dispositif de mesure (10) selon l'une des revendications précédentes, dans lequel la monture (50) comprend une barre de maintien et au moins une monture de capteur (52) en forme de U, qui présente une section transversale plus grande que la barre de maintien, et la monture de capteur (52) s'étend, au niveau d'une branche de la monture de capteur en forme de U (52), en affleurement avec la barre de maintien,

tandis que le prolongement de l'autre branche forme le trajet de mesure s'étendant parallèlement à la barre de maintien.

3. Dispositif de mesure (10) selon l'une des revendications précédentes,
dans lequel le second transducteur à ultrasons (20) est également agencé sur la monture (50) et la monture (50) forme en particulier une unité avec les transducteurs à ultrasons (18, 20).

4. Dispositif de mesure (10) selon l'une des revendications précédentes,
dans lequel le second transducteur à ultrasons (20) présente un contour optimisé vis-à-vis de l'écoulement, qui inhibe des turbulences de décollement.

5. Dispositif de mesure (10) selon l'une des revendications précédentes,
dans lequel le second transducteur à ultrasons (20) est susceptible d'être agencé dans le volume intérieur (14) du conduit (12) au moyen de la monture (50) ou d'une seconde monture propre optimisée vis-à-vis de l'écoulement.

6. Dispositif de mesure (10) selon l'une des revendications 1 à 4,
dans lequel le second transducteur à ultrasons (20) est susceptible d'être agencé au voisinage de la paroi intérieure du conduit (12) ou en renfoncement dans la paroi intérieure.

7. Dispositif de mesure (10) selon l'une des revendications précédentes,
dans lequel le conduit (12) est un conduit tubulaire avec une section transversale cylindrique ou rectangulaire, qui est réalisé pour des vitesses d'écoulement élevées d'au moins 40 m/s, ou même d'au moins 70 m/s, en particulier un conduit à gaz de torche.

8. Dispositif de mesure (10) selon l'une des revendications précédentes,
dans lequel le premier transducteur à ultrasons (18) et le second transducteur à ultrasons (20) sont agencés avec décalage parallèle l'un par rapport à l'autre, de sorte que le premier trajet de mesure et le second trajet de mesure s'étendent à distance l'un de l'autre avec un décalage (40) en direction d'écoulement.

9. Procédé de mesure pour la détermination d'une vitesse d'écoulement et/ou d'un débit d'un fluide (14) qui s'écoule dans un conduit (12), dans lequel on analyse une différence de temps de parcours, dépendante de la vitesse d'écoulement, des ultrasons entre un premier transducteur à ultrasons (18) et un second transducteur à ultrasons (20), à savoir des ultrasons sur un premier trajet de mesure et sur un second trajet de mesure qui s'étend en direction opposée au premier trajet de mesure, dans lequel au moins le premier transducteur à ultrasons (18) est introduit, au moyen d'une monture (50) réalisée sous forme de lance, dans le volume intérieur du conduit (12) et incident l'écoulement de fluide,
**caractérisé en ce que** les turbulences de décollement (38) au niveau du premier transducteur à ultrasons (18) et de la monture (50) sont inhibés par un contour optimisé vis-à-vis de l'écoulement (32), et la monture (50) s'étend, depuis une paroi intérieure du conduit (12), en oblique dans le volume intérieur (14) de celui-ci, et présente, de manière semblable à une surface portante, une arête qui converge en pointe en direction de l'écoulement incident et une arête plane en direction de l'écoulement partant.

10. Procédé de mesure selon la revendication 9,
dans lequel le fluide a une vitesse d'écoulement d'au moins 40 m/s au même d'au moins 70 m/s, et en particulier du gaz de torche.

11. Procédé de mesure selon les revendications 9 ou 10, qui est conçu pour le service en continu, du fait que l'on soude une bride unique pendant la poursuite de l'écoulement de fluide et que l'on introduit la monture (50) dans l'écoulement de fluide.

12. Procédé de mesure selon l'une des revendications 9 à 11,
dans lequel la mesure a lieu en prévoyant un décalage parallèle (40) en direction d'écoulement du premier trajet de mesure par rapport au second trajet de mesure.

Figur 1

Figur 2

Figur 3

Figur 4

## Figur 5a

## Figur 5b

## Figur 5c

# Figur 6a

# Figur 6b

Figur 7

Figur 8

## Figur 9 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004060118 A1
- WO 2006063873 A1
- DE 102004060064 A1
- DE 19859572 A1
- US 4754650 A

**In der Beschreibung aufgeführte Nicht-Patentliteratur**

- Perturbation and adjoint analyses of flow-acoustic interactions in an unsteady 2D jet. **L. CERVINO et al.** Proceedings of the 2002 Summer Program. Center for Turbulence Research, 2002